# EUROPEAN PATENT APPLICATION

(11) **EP 2 860 408 A2**
(43) Date of publication of application: **15.04.2015**
(21) Application number: 13728229.9
(22) Date of filing: 01.04.2013
(51) Int. Cl.: F16B 7/02, F16B 7/04

(54) **CONNECTION ELEMENT AND NON-PERMANENT STRUCTURAL SYSTEM**

(30) Priority: 28.03.2012 ES 201230463
(71) Applicant: Elegance Carpentry, S.L., 28723 Pedrezuela (Madrid) (ES)
(72) Inventor: EIROA LUCES, Conrado, 28200 San Lorenzo del Escorial, Madrid (ES); CUESTA BAILE, Eugenio, 28050 Madrid (ES); MUÑOZ GUIJOSA, Juan Manuel, 28050 Madrid (ES)
(74) Representative: Elzaburu S.L.P.
(86) International application number: PCT/ES2013/070213
(87) International publication number: WO 2013/144414

(57) **Abstract**

According to one aspect of the invention, a connection element (1), for external, detachable joining of a structural beam element (10) is provided, comprising a bottom plate (2) intended to be in contact with the bottom surface (11) of the structural beam element (10), a top plate (3) intended to be in contact with the top surface (12) of the structural beam element, two side plates (4), and a rear plate (5) characterized in that the longitudinal thickness of the bottom plate (2) increases from the free edge of the bottom plate (2) towards its edge at the rear plate (5).

Another aspect of the invention describes a detachable structural system which employs a plurality of connection elements (1) rigidly coupled to each other and a plurality of structural beam elements (10).

## Description

### Field of the invention

The present invention is comprised in the technical field of structural connections and can be used, for example, to connect, join or lock structural elements in civil or architectural construction, machines, platforms, ships or the like. More precisely it refers to friction fittings which can be detached. Additionally it refers to a structural detachable system that uses this connection element.

### Backaround of the invention

Traditionally the materials more frequently used for structures are wood, metals (mainly steel and aluminium) and concrete, This is due to their higher mechanical strength, environmental stability, the easiness of their manufacture and shaping and their reduced costs. Different, simple connection methods between the different resistive elements comprising the complete structural sets have been developed.

In applications were stiffness and not strength is the main design criterion as for instance residential construction, energy efficiency per unit weight is to be maximized. The development of new materials (for example polymeric materials and composites with polymeric or ceramic matrices and metallic, or fiberglass or carbon reinforcements) with very high stiffness/weight or strength/weight ratios with a higher cost open a considerable optimization potential in applications were traditional materials were before used.

New materials have a higher cost per weight unit with respect to traditional materials due to the lack of extensive application experience, which implies big research and development investments for mechanical characterization and the development of connection and production methods. Additionally, more material than that strictly necessary must be used due to the higher safety factors used due to those reasons.

The above facts limit the application of new materials currently to applications were cost is not the primary design criterion, but rather corrosion resistance (as in marine structures, bridges, fluid tanks, corrosive fluids piping or when element size is not critical (as post assembled building structures).

The stiffness and strength anisotropy associated to composite materials makes the connection methods more complex than those with traditional materials, which makes the design even more expensive, The low matrix strength turns out in a high sensibility to stress concentrations, unavoidable in structural connections.

Typical composite material element connections are screwed or riveted, glued, or made out of a combination of these methods. The European Structural Polymeric Group "Structural Design of Polymer Composites" , E 8 FN SPON 1996, pp. 120-211, ISBN 0 419 19450 9 is a handbook which compiles different recommendations for the structural design with composite polymeric materials. Typical connections used in these materials are described in the referred pages.

The lower stiffness of some composite materials implies higher cross section heights than those usually employed with traditional materials for fulfilling deflection criteria. This fact firstly implies structural inconveniences, due not only to the bigger element connections but also to the additional material to be added to avoid the local buckling due to the thickness reduction associated to the increase of height if the moment of inertia is to remain constant. Secondly, it also implies architectonic inconveniences as a result of the bigger space occupied by the structural elements.

There are different solutions in order to avoid that cross section increase without affecting deflections, as for example the use of cables or the reduction of the distances between slabs, increasing their quantity. These solutions mean architectonic difficulties or material cost increases, making their application less attractive.

The present invention provides an improved connection mean for structural elements made out of composite materials, to mitigate some of the inconveniences associated to structural composite elements connections described above.

### Summary of the Invention

According to an aspect of the present invention, a connecting element is provided, for the detachable, external fastening of a structural beam element, including a lower plate intended to be in contact with the bottom surface of an structural beam element, an upper plate intended to be in contact with the top surface of the structural beam element, two side plates and a rear plate, where the longitudinal thickness of the bottom plate increases from the free edge of the bottom plate edge to the rear plate.

Another aspect of the invention relates to a detachable external structural fastening system which employs a plurality of connection elements rigidly coupled each other, as well as a plurality of structural beam elements.

The invention is advantageous in the extent that it provides a reduction of stress concentrations, a more uniform distribution of contact pressures and an increased contact surface. The increase in the connection efficiency between the connecting element and the structural beam element allows for a reduction in the beam cross section, which in turn results in material saving and cost reduction.

Another advantage of the invention arises from the detachable nature of the connection. On one hand, it eases the structure assembly operation, as well as the connection inspection task, also reducing the need for qualified staff and equipment, the latter especially necessary in bonding operations. On the other hand, it allows for the disassembly of the structure.

Other features and advantages related to the present invention will become apparent from the following detailed description of the attached drawings describing its object.

### Brief description of the Drawings

In order to allow for a better understanding of the invention features, several drawings with illustrative but non limiting character are attached.
Figure 1 schematically shows a connection element coupled to a structural beam element. Figure 2 schematically shows a perspective of the connection element.
Figure 3 schematically shows a perspective of the connection element without one side plate.
Figure 4 schematically shows the detail of a structural connection as a part of a detachable structural system using the connection element.
Figure 5 schematically shows an exploded perspective detail of the structural connection element shown in figure 4, employing a dovetail joint.
Figures 6 and 7 show a male connection element of the structural connection element shown in Figure 5 without a side plate, in perspective and in side view respectively
Figures 8 and 9 show a second, female connection member of the structural connection element shown in Figure 5 without a side plate, in perspective and in side view respectively

### Embodiments of the invention

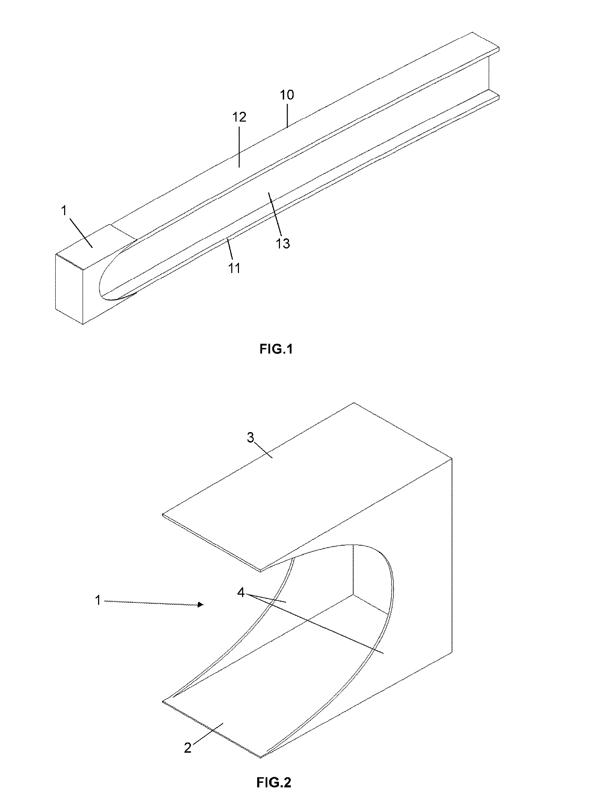

Figure 1 represents the external, detachable fastening of a connection element 1 with a structural beam element 10. The connection element 1, shown isolated in Figure 2, comprises of a lower plate 2, intended to be in contact with the structural beam element bottom surface 11, a top plate 3 intended to be in contact with the structural beam element top surface 12, two side plates 4 and a rear plate 5. The side plates 4 join the side edges of the bottom plate 2 and top plate 3.

The design of the connection element 1 is based on the progressive stiffness decrease according to the longitudinal and transversal axes of the structural beam element 10, maximizing deflection compatibility between the connection element 1 and the structural beam element 10 in the contact zones along both.

The width and height of the connection element 1 are predefined by the dimensions of the structural beam element 10 to be connected to and the gap between the connection element 1 and the structural beam element 10. The degrees of freedom for the design of the structural connection element according to the longitudinal axis of the structural beam element 10 are length and top plate 2 and bottom plate 3 longitudinal thicknesses, as well as the side plates width 4.

Clamping moment between the connection element 1 and the structural beam element 10 comes firstly from the friction between the bottom beam element surface 11 and the bottom plate 2 and the top beam element surface 12 with the top plate 3, and secondly due to contact forces between, on one hand, the beam element bottom surface 11 and the bottom plate 2 and, on the other hand, the beam element top surface 12 and the top plate 3. The length of the bottom plate 2 and top plate 3 is set up so that the torque lever arm is enough so that the stress in the bottom plate 2 and top plate 3 does not exceed the allowable value.

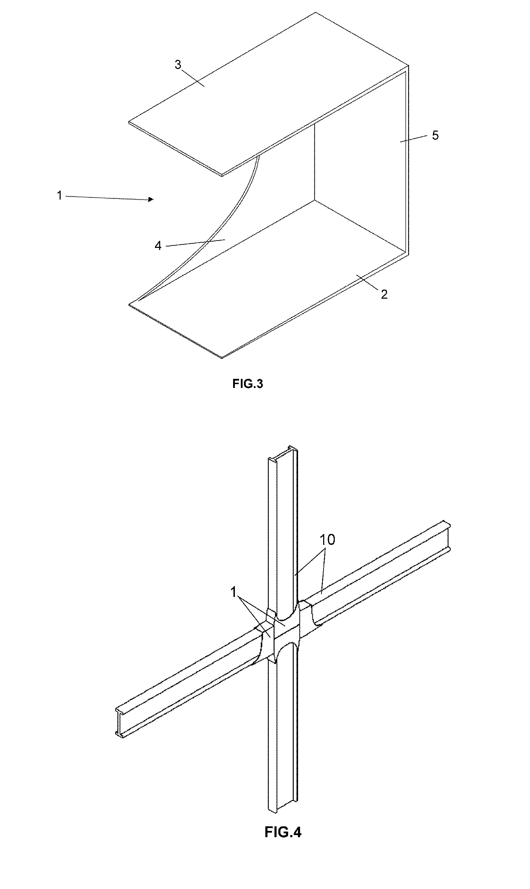

Figure 3 depicts deflection compatibility between, firstly, the beam element bottom surface 11 and the bottom plate 2 and, secondly, the beam element top surface 12 and the top plate 3. The longitudinal thickness of the bottom plate 2 increases from the free edge of the bottom plate 2 to its edge at the rear plate 5, while the longitudinal thickness of the top plate 3 increases from the free edge of the top plate 3 to the edge at rear plate 5.

In a second embodiment the top beam element surface 12 is under tension. To allow for compatibility between the deflections of the top beam element surface 12 and the top plate 3 the longitudinal thickness of the top plate 3 decreases from the free edge of the top plate 3 towards its edge at the rear plate 5 as shown in Figure 4.

The side plates 4 contribute in deflection compatibility between the bottom 2 and top 3 plates and the bottom 11 and top 12 beam element surfaces. The width of the side plates 4 preferably increases with the distance to the neutral fiber of the structural beam element 10 as shown in Figures 1 and 2. This results in a concave shape of the side plates 4.

A more efficient distribution of both shear forces withstood by the structural beam element 10 as well as the pressures arising from the contact between the structural beam element 10 and the connection element 1, transmitted through the web 13 of the structural beam element 10 is achieved by reducing the thickness of the bottom plate 2 and/or the transverse thickness of the top plate 3 around the axis of the web 13.

In the particular case that the web 13 is centered with respect to the bottom 11 and top 12 beam element surfaces, the thickness of the bottom cover 2 is minimum around the center of the free edge of the bottom place 2 and increases towards the respective edges of the bottom plate 2 at the side plates 4 and/or the thickness of the top plate 3 is minimum around the center of the free edge of the top plate 3 and varies towards the respective edges of the top plate 3 at the side plates 4. The use of a linear variation law of the thickness of the bottom 2 and top 3 plates is particularly advantageous as it makes for easing the manufacture of the connecting element 1.

Figure 4 depicts a structural node in a detachable structural system which employs a plurality of connection elements 1 as well as a plurality of structural beam elements 10. Each structural beam element 10 has a corresponding connection element 1, designed as described above.

The coupling of the plurality of the connection elements 1 has adequate stiffness to transmit the forces among the plurality of structural beam elements 10, which the structural node comprises, using different solutions such as, for example, screwing or welding. Furthermore the rigid coupling of the plurality of connection elements 1 can be carried out by dovetails or T-shaped tails incorporated in the outer faces of the bottom 2 and top 3 plates and/or rear 5 plates of the connection elements 1.

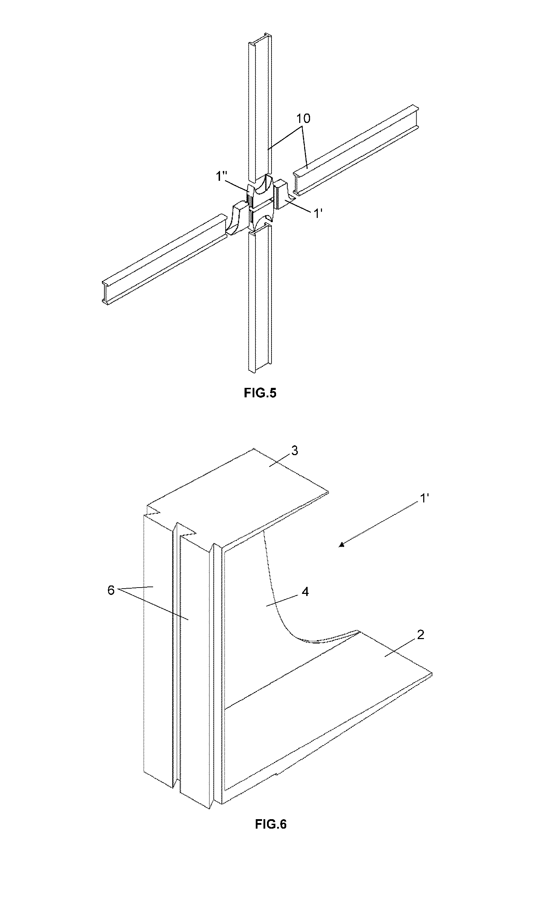

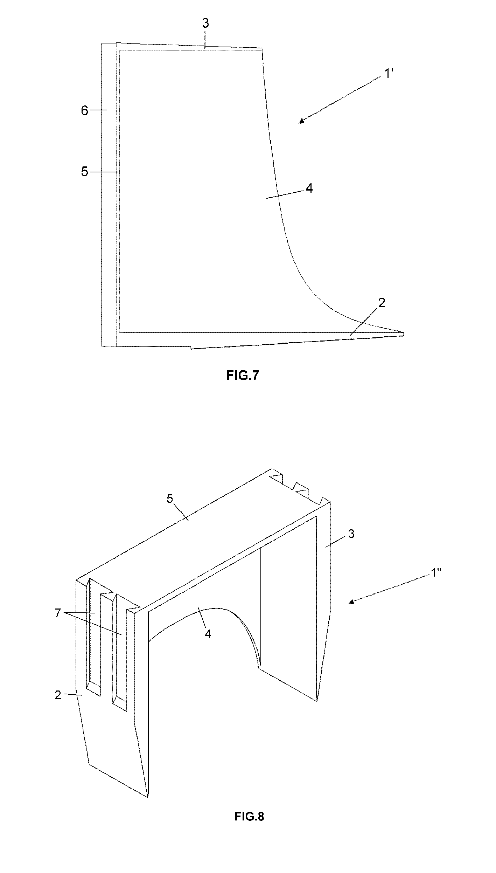

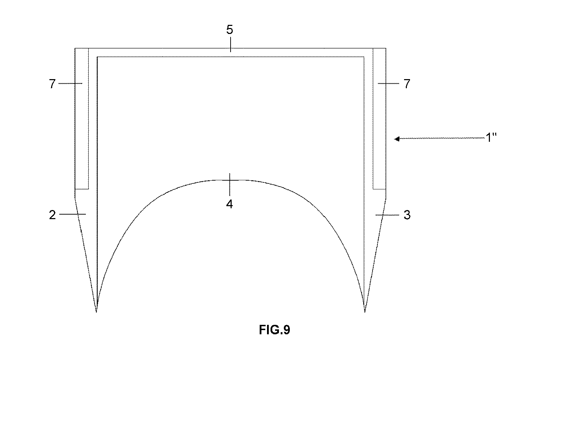

Figures 6 and 7 show a male connection element 1', while Figures 8 and 9 show a female connection element 1", in both cases without a side plate 4, for achieving a rigid connection, through dovetails, at the structural node shown in Figure 5. The rear plate 5 of the connection element 1 has two protuberances 6 with dovetail shape.

The longitudinal thickness of the bottom plate 2 of the female connection element 1 ", increases from the free edge of the bottom plate 2 towards its edge at the rear plate 5 to an approximately midpoint, from which the longitudinal thickness of the bottom plate 2 remains constant. The bottom plate 2 has two dovetail shaped grooves 7 intended to be in contact with the protuberances 5 of the male connection element 1. The grooves 7 have been made from the edge of the bottom plate 2 towards the free edge of the bottom plate 2, being the grooves 7 constrained to the zone with constant longitudinal thickness, forming a mechanical stop for the axial forces transmission. The top plate 5 has also two grooves 7.

Other embodiments for the rigid coupling of the plurality of connection elements 1 will be apparent to a skilled individual after analyzing the description or may be inferred through the praxis of the invention.

The use of curved beam elements 10 is especially advantageous in the detachable structural system. On one hand, when applying forces, part of the overall deflection does not count for the evaluation of the allowable deflection, allowing for further reduction of the beam element cross section size.

On the other hand, if the frame slabs are sufficiently stiff, the use of curved beam elements 10 allows transforming bending of the beam element 10 into compression, consequently giving rise to potential reductions in deflections as well as necessary material.

Although several embodiments have been described and illustrated, it is evident that modifications which are comprised in its scope might be introduced, thus not being that considered limited to such embodiments but only to the content of following claims.

## Claims

1. Connection element (1) of a detachable, external fastening of a structural beam element (10) comprising a bottom plate (2) intended to be in contact with the bottom surface (11) of a structural beam element (10), a top plate (3) intended to be in contact with the top surface (12) of a structural beam element (10), two side plates (4) and a rear plate (5) **characterized in that** the longitudinal thickness of the bottom plate (2) increases from the free edge of the bottom plate (2) towards its edge at the rear plate (5).

2. Connection element (1) according to claim 1 **characterized in that** the longitudinal thickness of the top plate (3) increases from the free edge of the top plate (3) towards its edge at the rear plate (5).

3. Connection element (1) according to any of the preceding claims, **characterized in that** the free edge of the side plates (4) is concave.

4. Connection element (1) according to any of the preceding claims, **characterized in that** the transverse thickness of the bottom plate (2) varies between the edges of the bottom plate (2) at the side plates (4).

5. Connection element (1) according to any of the preceding claims, **characterized in that** the transverse thickness of the top plate (3) varies between the edges of the top plate (3) at the side plates (4).

6. Connection element (1) according to any of the preceding claims, **characterized in that** the rear plate (5) has at least one protuberance (6).

7. Connection element (1) according to any of the preceding claims, **characterized in that** the bottom plate (2) has at least one groove (7).

8. Connection element (1) according to any of the preceding claims, **characterized in that** the top plate (3) has at least one groove (7).

9. Detachable structural system **characterized in that** it comprises a plurality of connection elements (1) according to any of the preceding claims, rigidly coupled to each other, and a plurality of structural beam elements (10).

10. Detachable structural system according to claim 9, **characterized in that** at least one structural beam element (10) is curved.
